# EUROPEAN PATENT SPECIFICATION

(11) **EP 2 394 830 B1**
(45) Date of publication and mention of the grant of the patent: **17.04.2013**
(21) Application number: 11169478.2
(22) Date of filing: 10.06.2011
(51) Int. Cl.: B60H 1/32, F25B 6/04, B60H 1/00

(54) **Cooling medium circuit for vehicle**
Kühlmittelkreislauf für Fahrzeuge
Circuit refroidissement pour véhicule

(30) Priority: 11.06.2010 SE 1050596
(43) Date of publication of application: 14.12.2011
(73) Proprietor: Scania CV AB, 151 87 Södertälje (SE)
(72) Inventor: Forlsund, Jerker, SE-151 47 SÖDERTÄLJE (SE); Kallio, Mikko, SE-153 71 HÖLÖ (SE)

(56) References cited:
- EP-A1- 2 110 274
- WO-A1-2008/126651
- DE-A1-102007 035 110
- US-A1- 2009 113 913

## Description

### TECHNICAL FIELD

The present invention relates to a cooling medium circuit particularly for air conditioning systems intended for vehicles. The invention relates more specifically to a cooling medium circuit intended to be operated electrically when the vehicle's engine is switched off and the generator is not producing electrical energy. The invention relates especially to cooling medium circuits of the kind provided with more than one condenser.

### STATE OF THE ART

Many vehicles are now equipped with air conditioning systems, so-called AC systems. This applies not least to commercial vehicles which for example carry goods over long distances and therefore not infrequently travel through areas with warm climates. Such AC systems usually have a cooling medium circuit comprising inter alia a condenser which delivers the thermal energy which the AC system conveys out from the vehicle's enclosed interior space, e.g. from a driving cab, saloon or the like. The cooling medium is pumped round in the system and through the condenser by means of a compressor which is driven mechanically by the vehicle's engine.

The location of the condenser is usually such that it is cooled by the draught generated by motion of the vehicle. If this draught is not sufficient to cool away the thermal energy supplied, a fan is provided close to the condenser to create an air flow through the condenser. The fan may be driven mechanically or by an electric motor.

There is a need for such an AC system to function even when the vehicle is stationary and the engine is switched off, e.g. during breaks and rests. For the system to be able to function even when the vehicle is stationary and has its engine switched off, a small electric compressor may be provided in the cooling medium circuit. This electric compressor is powered by a battery provided in the vehicle. An electrically operated fan is also required to create an air flow through the condenser.

Both the electric compressor and the electric fan absorb a substantial amount of electrical energy, which means that the electrical energy stored in the vehicle's batteries is quickly consumed when the AC system is in use and the generator is not charging the batteries. The compressor and the fan used when the vehicle is stationary are usually dimensioned smaller than the components used in normal operation, but they still draw a significant amount of electrical energy.

There is therefore a need to improve and make more effective the cooling in the AC system so that it can be used for a lengthy period even when the vehicle's engine is switched off.

Various solutions have been proposed for making AC systems in vehicles more effective to enable them to deliver sufficient cooling even during periods when the vehicle is stationary.

US2009/0019861 describes for example an AC system for vehicles which is intended to be able to provide sufficient cooling during critical situations, e.g. when the vehicle is stationary. To solve the problem, an extra condenser and a cooling flange or cooling device are incorporated in the cooling medium circuit. The cooling flange or cooling device is situated after, i.e. downstream of, the further condenser. However, this solution does not indicate how cooling is to be effected without extra energy being supplied. The solution is thus intended to achieve more cooling, but at the cost of energy consumption.

US2006/0042286 describes a system which comprises an extra condenser, an extra compressor and an extra evaporator which are smaller than the system's ordinary components. These smaller components are connected together in a common circuit and put into operation when the vehicle is stationary, so that less energy is expended. This solution does not indicate any effective and alternative way of increasing the cooling capacity of the condenser with less energy consumption.

DE 10 2007 035110, which is considered as the closest prior art, further discloses a cooling medium circuit according to the preamble of independent claim 1.

The state of the art in this field therefore does not solve the problem of providing a vehicle cab with effective cooling for a lengthy period without consuming a substantial amount of electrical energy.

### SUMMARY OF THE INVENTION

An object of the invention is to solve the above problem and propose a cooling medium circuit for an air conditioning system of the kind indicated in the introduction which can for example cool a vehicle cab more effectively when the vehicle's engine is switched off so that the consumption of electrical energy is minimised.

Another object of the invention is to propose a cooling medium circuit which, despite minimised consumption of electrical energy, occupies little space and utilises the vehicle's existing constructional parts for the cooling.

A further object of the invention is that the configuration should be inexpensive and easy to manufacture, fit and maintain.

These and further objects and advantages are achieved according to the invention by a device defined by the features indicated in the characterising part of the independent claim 1.

The invention thus relates to a cooling medium circuit which is intended especially for air conditioning systems for vehicles and which can also be used for lengthy periods when the vehicle's prime mover is switched off, e.g. during rest or break periods. The cooling medium circuit according to the invention consumes less electrical energy as a result of a further radiator/condenser being provided, preferably in series with the ordinary condenser of the cooling medium circuit. This radiator or further condenser is connected mechanically to a substantial existing constructional part or component in the vehicle, preferably made of metal, wherein said component is one of the vehicle's frame beams, which as a result of its location, configuration and inherent mass can absorb from the radiator/condenser fitted adjacent to it thermal energy which would otherwise has to be removed by means of a fan. The frame beam and other components connected to it serve not only as a heat reservoir capable of absorbing thermal energy but also as a further radiator as a result of the natural convection which occurs when the temperature difference between the vehicle part and surrounding air increases. This solution reduces or eliminates the need for an extra electric fan, and the consumption of electrical energy for operating the cooling medium circuit decreases when the vehicle is stationary with its engine switched off. The invention also means that the further radiator/condenser may be smaller in size and/or that the further electric compressor can be run with less power, further reducing the consumption of electrical energy.

Further features and advantages of the invention are indicated by the more detailed description of the invention set out below and the attached drawings and other claims.

### BRIEF LIST OF DRAWINGS

The invention is described in more detail below in the form of some preferred embodiment examples with reference to the attached drawings.
**Figure 1** depicts schematically a cooling medium circuit according to the state of the art.
**Figure 2** depicts schematically a cooling medium circuit according to the invention with an extra radiator/condenser associated with a part/component in the vehicle which is preferably made of metal.
**Figure 3** depicts in an oblique side view a radiator/condenser according to the invention fitted against the side of one of the vehicle's frame beams.
**Figure 4** depicts in an oblique side view the radiator/condenser with one side omitted to reveal the cooling coils for the cooling medium.
**Figure 5** depicts an alternative frame beam such that the radiator/condenser integrated with it takes the form of longitudinal cooling ducts through which the cooling medium can be led.

### DESCRIPTION OF PREFERRED EMBODIMENTS

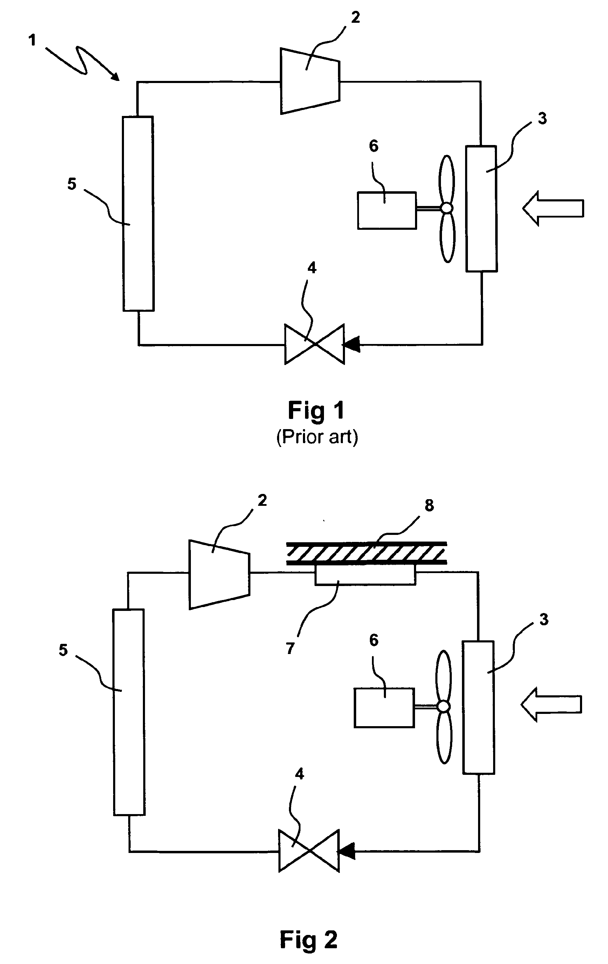

**Figure 1** depicts schematically a cooling medium circuit 1 in an air conditioning system according to the state of the art. The cooling medium circuit 1 comprises mainly a compressor 2, a condenser 3, an expansion valve 4 and an evaporator 5. The compressor 2, which may be driven mechanically by the vehicle's undepicted engine or electrically via an undepicted electric motor, compresses gaseous cooling medium which thereby changes to liquid form downstream of, in flow terms after, the compressor 2. The condenser 3 then becomes warm and heat is delivered to the surrounding air. After the expansion valve 4, the pressure drops sharply and the cooling medium is vaporised. The evaporator 5 becomes cold and therefore absorbs thermal energy from the surrounding air. Thermal energy is thus moved in the system from one location to another. To make the delivery of heat from the condenser 3 more effective, an air flow needs to be provided through it. The simplest way of achieving the air flow in a vehicle is by the condenser 3 being so located that the draught caused by motion of the vehicle contributes to this air flow when the vehicle is in motion, but a fan 6 may also be provided to ensure the air flow. The fan 6 may be driven mechanically by the vehicle's engine or by means of an electric motor.

**Figure 2** depicts schematically a cooling medium circuit 1 according to the invention with a further radiator or condenser 7 disposed in series with the ordinary condenser 3. This further radiator/condenser 7 is situated in the vehicle adjacent to or against an existing vehicle part/component 8 which is preferably made of metal, to facilitate the removal of thermal energy from the radiator/condenser 7. The radiator/condenser 7 is preferably fitted adjacent to a frame part in the vehicle, e.g. adjacent to one of the vehicle's frame beams, which are of great mass and also present large surfaces to surrounding air. At least part of the heat released in this radiator/condenser 7 may thus be led into the frame beam 8. When the frame beam 8 has become so warm that the temperature difference relative to the surrounding air becomes great enough, thermal energy passes to surrounding air by natural convection.

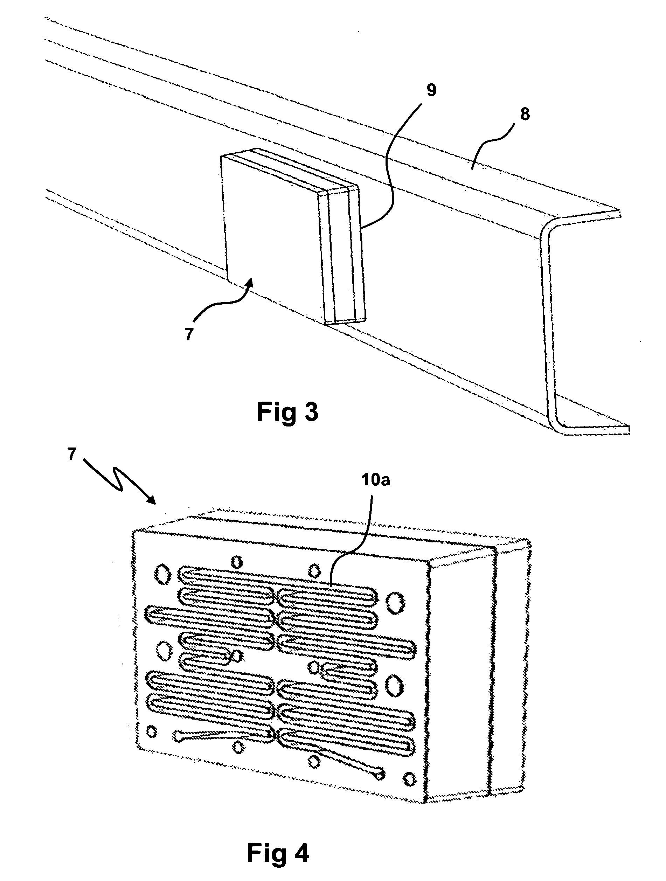

**Figure 3** depicts in an oblique side view a radiator/condenser 7 according to the invention fitted detachably against the side of one of the vehicle's frame beams 8. The radiator/condenser 7 is provided with at least one substantially planar contact surface 9 facing towards the frame beam 8 and thereby transfers thermal energy by mechanical contact to the frame beam 8.

**Figure 4** depicts in an oblique side view the further radiator/condenser 7 with a side portion omitted to reveal a cooling coil or duct 10a for the cooling medium. Thermal energy from the cooling medium is transferred via the cooling duct 10a to the casing of the radiator/condenser 7 and thence to surrounding metal parts and/or to surrounding air via the substantially planar contact surface 9.

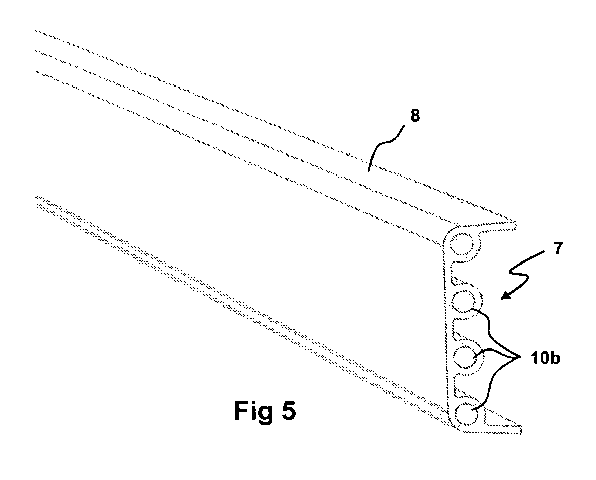

**Figure 5** depicts an alternative solution with a fixed radiator/condenser 7. The radiator/condenser 7 is here integrated in the frame beam 8 in that one or more longitudinal cooling ducts 10b through which the cooling medium can be led are provided in or adjacent to the frame beam 8 and are oriented in substantially the longitudinal direction of the frame beam. The cooling ducts 10b may be configured in various ways and may for example be made by compression moulding, by extrusion or by fitting of pipes or the like to the frame beam 8. Pipes may be fitted to the frame beam 8 by welding, adhesive bonding or in some other suitable way.

The above description is primarily intended to facilitate comprehension of the invention. The invention is of course not confined to the embodiments indicated, since other variants of it are also possible and conceivable within the scope of the claims set out below.

## Claims

1. A cooling medium circuit (1) for an air conditioning system, intended for a vehicle and comprising a compressor (2), a condenser (3), an expansion valve (4) and an evaporator (5), with a further radiator/condenser (7) provided in the cooling medium circuit (1), this further radiator/condenser (7) is situated adjacent to at least one vehicle part (8) which is preferably made of metal, in order to transfer thermal energy to the vehicle part (8) by mechanical contact
**characterised**
- **in that** the vehicle part (8) is one of the vehicle's frame beams.

2. A cooling medium circuit (1) according to claim 1,
**characterised**
**in that** the further radiator/condenser (7) is disposed in the cooling medium circuit (1) in series with the first condenser (3).

3. A cooling medium circuit (1) according to any one of the foregoing claims,
**characterised**
**in that** the radiator/condenser (7) is provided with a cooling coil or cooling duct (10a) via which thermal energy is transferred from the cooling medium to the casing of the radiator/condenser (7).

4. A cooling medium circuit (1) according to any one of the foregoing claims,
**characterised**
**in that** the radiator/condenser (7) is provided with a contact surface (9) via which thermal energy is transferred from the radiator/condenser (7) to the vehicle part (8).

5. A cooling medium circuit (1) according to any one of the foregoing claims,
**characterised**
**in that** the contact surface (9) is substantially planar.

6. A cooling medium circuit (1) according to any one of the foregoing claims,
**characterised**
**in that** the radiator/condenser (7) is integrated in the vehicle part (8).

7. A cooling medium circuit (1) according to any one of the foregoing claims,
**characterised**
**in that** the vehicle part (8) is provided with cooling ducts (10b).

8. A cooling medium circuit (1) according to claim 7,
**characterised**
**in that** the cooling ducts (10b) are disposed in substantially the longitudinal direction of the vehicle part (8).

9. A cooling medium circuit (1) according to any one of the foregoing claims,
**characterised**
**in that** the vehicle part (8) takes the form of one of the vehicle's frame beams.

10. A cooling medium circuit (1) according to claim 7 or 8,
**characterised**
**in that** the cooling ducts (10b) comprise pipes fitted to the vehicle part (8).

11. A cooling medium circuit (1) according to claim 7, 8 or 10,
**characterised**
**in that** the cooling ducts (10b) are fitted to the vehicle part (8) by welding, adhesive bonding or in some other similar way.

12. A cooling medium circuit (1) according to claim 7, 8, 10 or 11,
**characterised**
**in that** the cooling ducts (10b) are formed by, for example, compression moulding or extrusion.

13. A vehicle provided with a cooling medium circuit (1) according to any one of claims 1-12.

## Patentansprüche

1. Kühlmittelkreislauf (1) für eine Klimaanlage, vorgesehen für ein Fahrzeug und umfassend einen Kompressor (2), einen Kondensator (3), ein Expansionsventil (4) und einen Verdampfer (5), mit einem weiteren im Kühlmittelkreislauf (1) vorgesehenen Radiator/Kondensator (7), wobei sich dieser weitere Radiator/Kondensator (7) benachbart zu mindestens einem Fahrzeugteil (8) befindet, welches vorzugsweise aus Metall hergestellt ist, um über einen mechanischen Kontakt thermische Energie auf das Fahrzeugteil (8) zu übertragen,
**dadurch gekennzeichnet, dass** das Fahrzeugteil (8) einer der Rahmenträger des Fahrzeugs ist.

2. Kühlmittelkreislauf nach Anspruch 1,
**dadurch gekennzeichnet, dass** der weitere Radiator/Kondensator (7) im Kühlmittelkreislauf (1) in Serie mit dem ersten Kondensator (3) angeordnet ist.

3. Kühlmittelkreislauf (1) nach einem der vorgehenden Ansprüche,
**dadurch gekennzeichnet, dass** dem Radiator/Kondensator (7) eine Kühlspule oder eine Kühlleitung (10a) bereitgestellt ist, über die thermische Energie von dem Kühlmittel auf das Gehäuse des Radiators/Kondensators (7) übertragen wird.

4. Kühlmittelkreislauf (1) nach einem der vorhergehenden Ansprüche,
**dadurch gekennzeichnet, dass** der Radiator/Kondensator (7) mit einer Kontaktfläche (9) versehen ist, über die thermische Energie von dem Radiator/Kondensator (7) auf das Fahrzeugteil (8) übertragen wird.

5. Kühlmittelkreislauf (1) nach einem der vorhergehenden Ansprüche,
**dadurch gekennzeichnet, dass** die Kontaktoberfläche (9) im Wesentlichen eben ist.

6. Kühlmittelkreislauf (1) nach einem der vorhergehenden Ansprüche,
**dadurch gekennzeichnet, dass** der Radiator/Kondensator (7) in dem Fahrzeugteil (8) integriert ist.

7. Kühlmittelkreislauf (1) nach einem der vorhergehenden Ansprüche,
**dadurch gekennzeichnet, dass** das Fahrzeugteil (8) mit Kühlleitungen (10b) versehen ist.

8. Kühlmittelkreislauf nach Anspruch 7,
**dadurch gekennzeichnet, dass** die Kühlleitungen (10b) in der im Wesentlichen longitudinalen Richtung des Fahrzeugteils (8) angeordnet sind.

9. Kühlmittelkreislauf (1) nach einem der vorgehenden Ansprüche,
**dadurch gekennzeichnet, dass** das Fahrzeugteil (8) in Form eines der Rahmenträger des Fahrzeugs ausgebildet ist.

10. Kühlmittelkreislauf (1) nach Anspruch 7 oder 8,
**dadurch gekennzeichnet, dass** die Kühlleitungen (10b) an das Fahrzeugteil (8) angepasste Rohre umfassen.

11. Kühlmittelkreislauf (1) nach Anspruch 7, 8 oder 10,
**dadurch gekennzeichnet, dass** die Kühlleitungen (10b) durch Schweißen, Adhäsionskleben oder auf eine andere, ähnliche Weise an das Fahrzeugteil (8) angepasst sind.

12. Kühlmittelkreislauf (1) nach Anspruch 7, 8, 10 oder 11,
**dadurch gekennzeichnet, dass** die Kühlleitungen (10b) beispielsweise durch Pressformen oder Extrusion geformt werden.

13. Fahrzeug, bei dem ein Kühlmittelkreislauf (1) nach einem der Ansprüche 1 bis 12 vorgesehen ist.

## Revendications

1. Circuit de milieu de refroidissement (1) pour un système de climatisation, conçu pour un véhicule et comprenant un compresseur (2), un condenseur (3), une soupape d'expansion (4) et un évaporateur (5), avec un radiateur/condenseur additionnel (7) disposé dans le circuit de milieu de refroidissement (1), ce radiateur/condenseur additionnel (7) étant situé au voisinage d'au moins une partie de véhicule (8) qui est de préférence réalisée en métal, afin de transférer de l'énergie thermique à la partie de véhicule (8) par contact mécanique,
**caractérisé en ce que** la partie de véhicule (8) est l'un des longerons du châssis du véhicule.

2. Circuit de milieu de refroidissement (1) selon la revendication 1, **caractérisé en ce que** le radiateur/condenseur additionnel (7) est disposé dans le circuit de milieu de refroidissement (1) en série avec le premier condenseur (3).

3. Circuit de milieu de refroidissement (1) selon l'une quelconque des revendications précédentes, **caractérisé en ce que** le radiateur/condenseur (7) est muni d'un serpentin de refroidissement ou d'un conduit de refroidissement (10a) par l'intermédiaire duquel de l'énergie thermique est transférée du milieu de refroidissement au carter du radiateur/condenseur (7).

4. Circuit de milieu de refroidissement (1) selon l'une quelconque des revendications précédentes, **caractérisé en ce que** le radiateur/condenseur (7) est muni d'une surface de contact (9) par l'intermédiaire de laquelle de l'énergie thermique est transférée du radiateur/condenseur (7) à la partie de véhicule (8).

5. Circuit de milieu de refroidissement (1) selon l'une quelconque des revendications précédentes, **caractérisé en ce que** la surface de contact (9) est sensiblement plane.

6. Circuit de milieu de refroidissement (1) selon l'une quelconque des revendications précédentes, **caractérisé en ce que** le radiateur/condenseur (7) est intégré à la partie de véhicule (8).

7. Circuit de milieu de refroidissement (1) selon l'une quelconque des revendications précédentes, **caractérisé en ce que** la partie de véhicule (8) est munie de conduits de refroidissement (10b).

8. Circuit de milieu de refroidissement (1) selon la revendication 7, **caractérisé en ce que** les conduits de refroidissement (10b) sont disposés sensiblement dans la direction longitudinale de la partie de véhicule (8).

9. Circuit de milieu de refroidissement (1) selon l'une quelconque des revendications précédentes, **caractérisé en ce que** la partie de véhicule (8) prend la forme de l'un des longerons du châssis du véhicule.

10. Circuit de milieu de refroidissement (1) selon la revendication 7 ou 8, **caractérisé en ce que** les conduits de refroidissement (10b) comprennent des tuyaux adaptés sur la partie de véhicule (8).

11. Circuit de milieu de refroidissement (1) selon la revendication 7, 8 ou 10, **caractérisé en ce que** les conduits de refroidissement (10b) sont adaptés sur la partie de véhicule (8) par soudage, liaison adhésive ou d'une quelconque autre façon similaire.

12. Circuit de milieu de refroidissement (1) selon la revendication 7, 8, 10 ou 11, **caractérisé en ce que** les conduits de refroidissement (10b) sont formés, par exemple, par extrusion ou moulage par compression.

13. Véhicule muni d'un circuit de milieu de refroidissement (1) selon l'une quelconque des revendications 1 à 12.
